# EUROPÄISCHE PATENTSCHRIFT

(11) **EP 0 312 711 B1**
(45) Veröffentlichungstag und Bekanntmachung des Hinweises auf die Patenterteilung: **02.06.1993**
(21) Anmeldenummer: 88111513.3
(22) Anmeldetag: 18.07.1988
(51) Int. Cl.: B60G 3/20, B60G 15/06, B60G 17/00

(54) **Radaufhängung für ein Kraftfahrzeug**
Wheel suspension for a motor vehicle
Suspension de roue pour un véhicule automobile

(30) Priorität: 21.10.1987 DE 3735544
(43) Veröffentlichungstag der Anmeldung: 26.04.1989
(73) Patentinhaber: Dr.Ing.h.c. F. Porsche Aktiengesellschaft, 70435 Stuttgart (DE)
(72) Erfinder: Schaible, Walter, Dipl.-Ing. FH, D-7251 Hemmingen (DE)

(56) Entgegenhaltungen:
- EP-A- 0 253 384
- DE-A- 3 219 685
- DE-A- 3 342 355
- DE-B- 1 580 494
- FR-A- 2 464 837

## Beschreibung

Die Erfindung bezieht sich auf eine Radaufhängung für ein Kraftfahrzeug nach dem Oberbegriff des Anspruchs 1.

Aus der DE-OS 32 19 685 ist eine Radaufhängung in Doppelquerlenker-Bauweise bekannt geworden, die ein Dämpfer- bzw. Federbein aufweist, das aufbauseitig abgestützt und mit dem unteren Querlenker verbunden wird. Bei einer solchen Ausführung ist es z.B. für angetriebene Achsen mit einem gewissen Bauaufwand am Federbein verbunden, die Antriebswelle ohne Behinderung zum Rad durchzuführen. Dies wird bei dieser Ausführung durch ein gabelförmiges unteres Federbeinende erreicht, zwischen dem die Antriebswelle frei drehend durchgeführt ist. Desweiteren ist aus der DE-B-1 580 494 eine Radaufhängung gemäß dem Oberbegriff des Anspruchs 1 bekannt, bei der zwischen dem Radträger und dem Lenker ein Zwischenglied angeordnet ist, auf dem das untere freie Ende des Dämpferbeines gehalten wird. Ferner ist aus der EP-A-0 253 384 eine Radaufhängung bekannt, die ein vom Radträger aus hochragendes Zwischenglied aufweist, das einerseits mit dem Radträger verschwenkbar und andererseits an seinem abgekehrten freien Ende mit einem Lenker verbunden ist, welcher schwenkbar angelenkt wird. In Höhe der Lagerung des Zwischengliedes am Radträger ist ein Dämpferbein fußseitig gelenkig abgestützt, das mit der Kolbenstange am Fahrzeugaufbau gehalten ist. Diese Schrift gehört zum Stand der Technik gemäß Artikel 54 (3) EPÜ.

Aufgabe der Erfindung ist es, eine Radaufhängung mit einer Anordnung eines Dämpfer- bzw. Federbeines mit einem optimierten Ansprechverhalten zu schaffen, wobei auch eine Verwendung des Dämpferbeins für angetriebene Achsen ohne zusätzlichen Bauaufwand möglich wird.

Durch die Verbindung des Dämpferbeines mit einem Zwischenglied, das einerseits mit dem oberen Querlenker und andererseits mit dem Radträger über das Führungsgelenk verbunden ist, wird in vorteilhafter Weise erreicht, daß das Dämpferbein von relativ großer Länge mit einem entsprechenden Dämpfweg auslegbar ist. Desweiteren ist bei angetriebenen Achsen ein genügender Freiraum unterhalb des Federbeinendes zur freien unbehinderten Durchführung einer Antriebswelle vorhanden, so daß eine aufwendige konstruktive Lösung, wie z. B. mit einem gabelförmig ausgeführten Federbeinende entfällt. Ferner wird durch die Anordnung des Dämpfer- bzw. Federbeines im Zwischenglied sowie durch die bevorzugte Lagerung des Stabilisator-Gehänges am Zwischenglied eine direkte Übersetzung vom Rad- zum Dämpfer- bzw. Federbein von 1 : 1 und eine Rad/Stabilisatorübersetzung von 1 : 1 erzielt.

Ein Ausführungsbeispiel der Erfindung ist in der Zeichnung dargestellt und wird im folgenden näher beschrieben.

Es zeigen:
- Fig. 1: eine schaubildliche Darstellung einer Radaufhängung in Doppelquerlenker-Bauweise mit einem Zwischenglied,
- Fig. 2: eine Ausführung eines Zwischengliedes mit einem aufgelösten Lenker und
- Fig. 3: eine weitere Ausführung eines Zwischengliedes mit einem einzigen Lenkerarm.

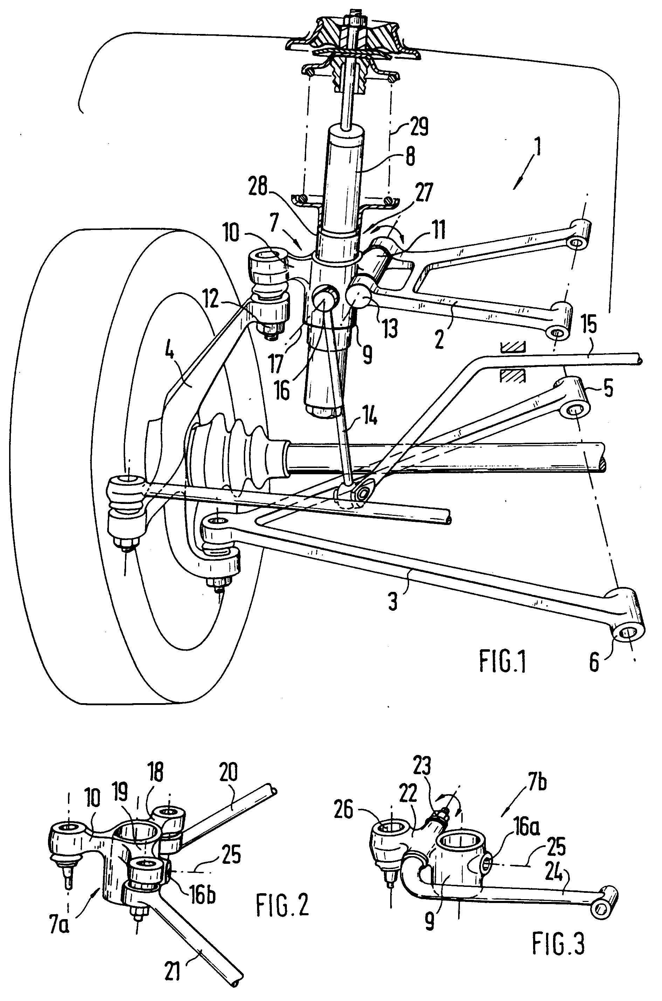

Die Radaufhängung 1 gemäß Fig. 1 umfaßt im wesentlichen einen oberen Querlenker 2 und einen unteren Querlenker 3, der mit einem Radträger 4 schwenkbar verbunden und am Fahrzeugaufbau in Lagern 5, 6 angelenkt ist. Zwischen dem Radträger 4 und dem oberen Querlenker 2 ist ein Zwischenglied 7 angeordnet, in dem ein Feder- bzw. Dämpferbein gehalten ist. Das Zwischenglied 7 umfaßt eine Aufnahmehülse 9, die vorragende Armen 10 und 11 aufweist, wobei der eine Arm 10 dem Radträger 4 zugerichtet ist und ein Führungsgelenk 12 aufnimmt und der weitere Arm 11 eine Lagerung 13 des Lenkers 2 trägt.

Vorzugsweise wird das untere Ende des Dämpferbeines 8 von der Aufnahmehülse 7 festgehalten, bzw. es ist mit der Hülse stoffschlüssig verbunden, wobei es durchaus möglich ist, daß auch ein anderer Bereich des Dämpferbeines haltend umgriffen wird.

Wie Fig. 1 zeigt, weist das Zwischenglied 7 ein Gelenk 16 für ein Gehänge 14 eines Stabilisators 15 auf. Das Gelenk 16 ist zwischen den beiden Armen 10 und 11 im Bereich der Aufnahmehülsen 7 vorgesehen, wobei wenigstens eine Schwenkachse 17 des Gehänges 14 in Längsrichtung des Fahrzeugs verläuft.

Nach einer weiteren Ausführung gemäß Fig. 2 umfaßt das Zwischenglied 7a einen ersten Arm 10 gemäß der Ausführung nach Fig. 1, sowie zwei weitere Arme 18 und 19 die divergierend zueinander angeordnet sind und den aufgelösten Querlenker 20, 21 aufnehmen. Zwischen diesen beiden Armen 18, 19 ist ein Gelenk 16b für das Gehänge 14 des Stabilisators mit wenigstens einer querverlaufenden Schwenkachse 25 vorgesehen.

In Fig. 3 ist ein Zwischenglied 7b dargestellt, das zwischen der Aufnahme 9 und dem Radträger 4 einen einzigen Arm 22 aufweist, der sowohl die Lagerung 26 für das Führungsgelenk 12 als auch eine Lagerung 23 für einen Arm eines Querlenkers 24 aufweist. In den beiden Ausführungen nach den Figuren 2 und 3 ist das Gelenk 16a und 16b für das Gehänge 14 mit wenigstens einer quer zum Fahrzeug verlaufenden Achse 25 gezeigt, wobei entsprechend der räumlichen Anordnung des Stabilisators diese Gelenke 16a und 16b auch eine Lage gemäß Fig. 1 aufweisen können. Die Gelenke 16, 16a und 16b können entsprechend der Ausführung an jedem Ort auf dem Umfang der Aufnahmehülse 9 angeordnet sein.

Das Dämpfer- bzw. Federbein 8 kann über Haltemittel 27, wie Gewinde 28, Klemmteile und dergleichen Befestigungselemente in der Aufnahmehülse 9 des Zwischengliedes 7; 7a; 7b in der Höhe verstellbar befestigt sein, so daß das Bein 8 entsprechend der Auslegung der Feder 29 in der Höhe eingestellt werden kann.

## Patentansprüche

1. Radaufhängung für ein Kraftfahrzeug, insbesondere eine Querlenkerachse, mit einem Dämpfer- bzw. Federbein (8), das aufbauseitig abgestützt und mit einem oberen Querlenker (2; 20,21; 24) verbunden ist und zwischen dem Radträger (4) und dem oberen Querlenker (2; 20,21; 24) ein Zwischenglied (7,7a,7b) angeordnet und fest mit dem Dämpfer- bzw. Federbein (8) verbunden ist, wobei einerseits zwischen dem Zwischenglied (7,7a,7b) und dem Radträger (4) ein Gelenk (12) und andererseits zwischen dem Zwischenglied (7,7a,7b) und dem Querlenker (2) eine Lagerung (13; 23 ) angeordnet ist,
**dadurch gekennzeichnet,**
daß das Gelenk (12) und die Lagerung (13; 23) zur Dämpfer- bzw. Federbeinachse beabstandet etwa in eine Ebene angeordnet sind und die Ebene etwa senkrecht zur Dämpfer- bzw. Federbeinachse liegt.

2. Radaufhängung nach Anspruch 1, dadurch gekennzeichnet, daß das Zwischenglied (7) zwei Arme (10 und 11) umfaßt, wobei der eine Arm (10) über das Gelenk (12) verdrehbar mit dem Radträger (4) verbunden ist und im anderen Arm (11) der obere geschlossene Querlenker (2) schwenkbar gehalten wird.

3. Radaufhängung nach den Ansprüchen 1 oder 2, dadurch gekennzeichnet, daß das Zwischenglied (7; 7a; 7b) zur festen Verbindung mit dem Dämpferbein (8) eine Aufnahmehülse (9) umfaßt, in der ein Bereich des Zylinders des Dämpferbeines (8) gehalten wird.

4. Radaufhängung nach den Ansprüchen 1, 2 oder 3, dadurch gekennzeichnet, daß in der Aufnahmehülse (9) des Zwischengliedes (7; 7a; 7b) ein Gelenk (16) für ein Gehänge (14) eines Stabilisators (15) angeordnet ist, das wenigstens eine in Fahrzeuglängsrichtung verlaufende Schwenkachse (17) aufweist.

5. Radaufhängung nach einem oder mehreren der vorhergehenden Ansprüche, dadurch gekennzeichnet, daß das Zwischenglied (7b) einen zwischen dem Radträger (4) und der Aufnahmehülse (9) angeordneten einzigen Arm (22) aufweist, der eine Lagerung (26) für das Gelenk (12) und benachbart dazu eine Lagerung (23) für einen Lenkerarm (24) aufweist.

6. Radaufhängung nach Anspruch 5, dadurch gekennzeichnet, daß in der Aufnahmehülse (9) des Zwischengliedes (7b) ein Gelenk (16a) mit wenigstens einer quer verlaufenden Schwenkachse (25) für ein Stabilisatorgehänge (14) angeordnet ist.

7. Radaufhängung nach einem oder mehreren der vorhergehenden Ansprüche, dadurch gekennzeichnet, daß das Zwischenglied (7a) mindestens zwei divergierende Arme (20, 21) zur schwenkbaren Lagerung eines aufgelösten Querlenkers (20, 21) umfaßt und eine Gehänge - Gelenk (16b) zwischen diesen beiden Armen (20, 21) vorgesehen ist.

8. Radaufhängung nach einem oder mehreren der vorhergehenden Ansprüche, dadurch gekennzeichnet, daß das Dämpfer- bzw. Federbein (8) lageveränderlich in der Höhe über Haltemittel (27) in der Aufnahmehülse (9) gehalten ist.

9. Radaufhängung nach einem oder mehreren der vorhergehenden Ansprüche, dadurch gekennzeichnet, daß die Haltemittel (27) aus einem Gewindeeingriff (28) zwischen dem Zylinder des Beines (8) und der Hülse (9) bestehen.

## Claims

1. A wheel suspension for a motor vehicle, in particular a transverse support-arm axle, with a shock-absorbing or telescopic leg (8) supported on the body and connected to an upper transverse support arm (2; 20, 21; 24), an intermediate member (7, 7a, 7b) being arranged between the wheel support (4) and the upper transverse support arm (2; 20, 21; 24) and being rigidly connected to the shock-absorbing or telescopic leg (8), and a joint (12) being arranged between the intermediate member (7, 7a, 7b) and the wheel support (4) on one side and a mounting (13; 23) being arranged between the intermediate member (7, 7a, 7b) and the transverse support arm (2) on the other side, **characterized in that** the joint (12) and the mounting (13; 23) are arranged in one plane at a distance from the axis of the shock-absorbing or telescopic leg, and the plane is orientated substantially at right angles to the axis of the shock-absorbing or telescopic leg.

2. A wheel suspension according to Claim 1, **characterized in that** the intermediate member (7) comprises two arms (10 and 11), one arm (10) being rotatably connected to the wheel carrier (4) by way of the joint (12) and the upper closed transverse support arm (2) being held pivotably in the other arm (11).

3. A wheel suspension according to Claim 1 or 2, **characterized in that** the intermediate member (7; 7a; 7b) comprises a receiving sleeve (9) for rigid connexion to the shock-absorbing leg (8), an area of the cylinder of the shock-absorbing leg (8) being held in the said receiving sleeve (9).

4. A wheel suspension according to Claim 1, 2 or 3, **characterized in that** a joint (16) for a suspension attachment (14) of a stabilizer (15) is arranged in the receiving sleeve (9) of the intermediate member (7; 7a; 7b), the joint (16) having at least one pivot axis (17) extending in the longitudinal direction of the vehicle.

5. A wheel suspension according to one or more of the preceding Claims, **characterized in that** the intermediate member (7b) has a single arm (22) arranged between the wheel support (4) and the receiving sleeve (9) and having a mounting (26) for the joint (12) and adjacent thereto a mounting (23) for a support arm (24).

6. A wheel suspension according to Claim 5, **characterized in that** a joint (16a) with at least one transversely extending pivot axis (25) for a stabilizer suspension attachment (14) is arranged in the receiving sleeve (9) of the intermediate member (7b).

7. A wheel suspension according to one or more of the preceding Claims, **characterized in that** the intermediate member (7a) comprises at least two diverging arms (20, 21) for pivotably mounting a released transverse support arm (20, 21), and a suspension-attachment/joint (16b) is provided between the said two arms (20, 21).

8. A wheel suspension according to one or more of the preceding Claims, **characterized in that** the shock-absorbing or telescopic leg (8) is held vertically displaceably in the receiving sleeve (9) by way of retaining means (27).

9. A wheel suspension according to one or more of the preceding Claims, **characterized in that** the retaining means (27) comprise a threaded engagement means (28) between the cylinder of the leg (8) and the sleeve (9).

## Revendications

1. Suspension de roue pour un véhicule automobile, en particulier un essieu à bras oscillant transversal, comportant un montant d'amortisseur ou jambe de force à ressort (8), qui est soutenu côté carrosserie et est relié avec un bras oscillant transversal supérieur (2 ; 20, 21 ; 24) et un organe intermédiaire (7, 7a, 7b), qui est monté entre le support de roue (4) et le bras oscillant transversal supérieur (2 ; 20, 21 ; 24) et est relié de manière fixe avec le montant d'amortisseur ou la jambe de force à ressort (8), une articulation (12) étant prévue entre l'organe intermédiaire (7, 7a, 7b) et le support de roue (4) et d'autre part, un appui (13 ; 23) étant prévu entre l'organe intermédiaire (7, 7a, 7b) et le bras oscillant transversal (2), caractérisée en ce que l'articulation (12) et l'appui (13 ; 23) sont espacés par rapport à l'axe du montant d'amortisseur ou de la jambe de force à ressort et sont disposés dans un plan qui est à peu près perpendiculaire à l'axe du montant de l'amortisseur ou de la jambe de force.

2. Suspension de roue selon la revendication 1, caractérisée en ce que l'organe intermédiaire (7) comporte deux bras (10 et 11), un bras (10) étant relié tournant avec le support de roue (4), par l'intermédiaire de l'articulation (12) et étant maintenu pivotant dans l'autre bras (11) du bras oscillant transversal (2) supérieur, fermé.

3. Suspension de roue selon les revendications 1 ou 2, caractérisée en ce que l'organe intermédiaire (7 ; 7a ; 7b) comprend, pour la liaison fixe avec le montant d'amortisseur (8), un manchon de logement (9) dans lequel est maintenue une zone du cylindre du montant d'amortisseur (8).

4. Suspension de roue selon les revendications 1, 2 ou 3 caractérisée en ce que dans le manchon de logement (9) de l'organe intermédiaire (7 ; 7a ; 7b), il est prévu une articulation (16) pour une suspension (14) d'un stabilisateur (15), qui comporte au moins un axe de pivotement (17), s'étendant dans la direction longitudinale du véhicule.

5. Suspension de roue selon une ou plusieurs des revendications précédentes, caractérisée en ce que l'organe intermédiaire (7b) comporte un bras unique (22), placé entre le support de roue (4) et le manchon de logement (9), qui présente un appui (26) pour l'articulation (12) et, à côté, un appui (23) pour un bras oscillant (24).

6. Suspension de roue selon la revendication 5, caractérisée en ce que dans le manchon de logement (9) de l'organe intermédiaire (7b), il est prévu une articulation (16a) avec au moins un axe de pivotement (25) transversal pour une suspension de stabilisateur (14).

7. Suspension de roue selon une ou plusieurs des revendications précédentes, caractérisée en ce que l'organe intermédiaire (7a) comporte au moins deux bras (20, 21) divergents en vue de l'appui pivotant d'un bras oscillant transversal (20, 21) en deux parties et une articulation de suspension (16b) est prévue entre ces deux bras (20, 21).

8. Suspension de roue selon une ou plusieurs des revendications précédentes, caractérisée en ce que le montant d'amortisseur ou la jambe de force à ressort (8) est maintenu dans le manchon de logement (9) dans une position variable en hauteur, par l'intermédiaire de moyens de fixation (27).

9. Suspension de roue selon une ou plusieurs des revendications précédentes, caractérisée en ce que les moyens de fixation (27) sont constitués d'un engagement fileté (28) entre le cylindre de la jambe de force (8) et le manchon (9).
